(19) Europäisches Patentamt
European Patent Office
Office européen des brevets

(11) **EP 3 287 333 A1**

(12) **EUROPEAN PATENT APPLICATION**
published in accordance with Art. 153(4) EPC

(43) Date of publication:
**28.02.2018 Bulletin 2018/09**

(51) Int Cl.:
**B60S 5/00** (2006.01)   **B60P 1/04** (2006.01)

(21) Application number: **16782877.1**

(22) Date of filing: **04.03.2016**

(86) International application number:
**PCT/JP2016/056707**

(87) International publication number:
**WO 2016/170855 (27.10.2016 Gazette 2016/43)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **24.04.2015   JP 2015088866**

(71) Applicant: **Hitachi Construction Machinery Co., Ltd.**
**Taito-ku,**
**Tokyo 110-0015 (JP)**

(72) Inventors:
• **WATANABE Atsushi**
  **Tokyo 100-8280 (JP)**
• **UOTSU Shinichi**
  **Tsuchiura-shi**
  **Ibaraki 300-0013 (JP)**
• **FUJITA Kouji**
  **Tsuchiura-shi**
  **Ibaraki 300-0013 (JP)**
• **NAKA Takuya**
  **Tokyo 100-8280 (JP)**

(74) Representative: **Beetz & Partner mbB**
**Patentanwälte**
**Steinsdorfstraße 10**
**80538 München (DE)**

(54) **VEHICLE, AND OPERATION SYSTEM FOR TRANSPORT VEHICLE FOR MINE**

(57)   A vehicle that enables information on climb-over/touch on an obstacle to be utilized in lengthening the lives of tires and a vehicle body and maintenance such as replacement/repair is provided. The vehicle includes: a vehicle body 1a running on tires; an environmental recognition device 2 detecting any obstacle ahead of the vehicle body 1a; a touch determination section 4 determining touch on a tire; and a storage section 4a recording information on an obstacle touched/climbed over. The storage section 4a records information on an obstacle determined to have been touched by the touch determination section 4.

FIG. 4

EP 3 287 333 A1

**Description**

Technical Field

The present invention relates to a vehicle equipped with a device for detecting obstacles.

Background Art

In recent years, systems have been increasingly incorporated into autonomous traveling dump trucks for mines, which have been introduced for the purpose of labor savings, for avoidance of a collision with a vehicle running ahead or an obstacle on the road. Such systems automatically perform speed control, steering and avoidance control, and the like by measuring the distance from or relative speed to the vehicle or the obstacle with an environmental recognition apparatus or the like. Millimeter wave sensors, laser scanners, stereo cameras, and the like are known as general environmental recognizing means for a vehicle ahead and an obstacle.

Aside from autonomous traveling dump trucks, systems for collision avoidance have been increasingly developed and introduced into human-operated ordinary mine dump trucks. Such systems measure a distance from or relative speed to a vehicle ahead or an obstacle on the road with an environmental recognition apparatus or a GPS system and issue a collision alarm to a driver or automatically perform speed control for avoidance of a collision.

An example of related arts referring to avoidance of a collision with a vehicle ahead or an obstacle is disclosed in Japanese Patent Application Laid-Open No. Hei 11(1999)-296229 (Patent Literature 1). The system disclosed in Patent Literature 1 is configured to store obstacle information detected beforehand on a traveling route using an environmental recognizing means and generate a new traveling route to prevent the position of that obstacle and a planned traveling route of the relevant vehicle from interfering with each other and leading to a disabled state or a collision.

Citation List

Patent Literature

PTL 1: Japanese Patent Application Laid-Open No. Hei 11(1999)-296229

Summary of Invention

Technical Problem

According to the related art disclosed in Patent Literature 1, in an autonomous traveling dump truck, positional information of an obstacle detected by an obstacle detecting means is stored in a storing means; when a traveling route from the relevant vehicle position to a destination is generated, the positional information of the obstacle stored in the storing means is referred to; and a traveling route is generated so as to prevent touch on the obstacle the information of which was stored beforehand.

Many related arts relate to techniques for preventing touch an obstacle on a traveling route detected with an obstacle detecting means as mentioned above. However, any related art referring to a method for coping with cases where an obstacle cannot be avoided and is climbed over by a tire or cases where an obstacle is touched is not found.

Not all the obstacles can be detected with an environmental recognizing means from a distance sufficiently remote to avoid a collision by steering or braking. At a mine, for example, a rock (stone) loaded on a dump truck may fall onto a road surface. These fallen objects (obstacles) may be in such a size that no problem arises in terms of traveling safety even though they are unavoidable. Since these small obstacles are smaller than vehicles and the like, they are not always detected with an environmental recognizing means from a distance sufficiently remote for avoidance by steering or braking. Even when such a small obstacle cannot be avoided and is climbed over or touched by a tire, no problem arises in traveling safety immediately after climb-over/touch. However, it is desirable to avoid such an obstacle in terms of the extended-lives and maintenance of tires, a vehicle body, and the like. Even when climb-over/touch took place with respect to such an obstacle as not to pose a problem in the traveling safety of a dump truck in the short view, it is desirable to utilize information on the climb-over/touch in terms of the extended-lives and maintenance of the tires and the vehicle body.

It is an objective of the present invention to provide a vehicle that makes it possible to utilize climb-over/touch information with respect to an obstacle in lengthening of the lives of tires and a vehicle body and maintenance such as replacement/repair.

Solution to Problem

To achieve the above objective, a vehicle of the present invention includes: a vehicle body; an environmental recognition device detecting any obstacle ahead of the vehicle body; a touch determination section determining touch on the obstacle; and a storage section recording information of the obstacle that was touched/climbed over. The storage section records information on an obstacle that was determined to has been touched by the touch determination section.

Advantageous Effects of Invention

According to the present invention, it is possible to record climb-over/touch information also with respect to climb-over/touch on a small obstacle that will not pose any problem in traveling safety even though climbed-over/touched; and to utilize the recorded information in lengthening of the lives of the tires and the vehicle body and maintenance such as replacement/repair. As a result, it is possible to early grasp any damage to the vehicle and early find a trouble cause and thereby implement operations with a high availability factor.

Other problems, configuration elements, and effects than described above will be apparent from the following description of an embodiment.

Brief Description of Drawings

FIG. 1 is a schematic diagram illustrating a mine where a transport vehicle (dump truck 1) for mine in an embodiment of the present invention.
FIG. 2 is a perspective view illustrating an overview of a dump truck 1.
FIG. 3 is a block diagram illustrating an overview of a traveling driving device 3 of a dump truck 1.
FIG. 4 is a block diagram illustrating an overview of the configurations of a control center and a transport vehicle 1 (as a dump truck) for mine used at a mine.
FIG. 5 is a schematic diagram illustrating a side face of a dump truck 1.
FIG. 6 is a schematic diagram illustrating a relation between TTC (Time to Collision), speed, and alarm regions with respect to a transport vehicle (dump truck 1) for mine (Refer to (Equation 1), described later, for TTC).
FIG. 7 is a schematic diagram illustrating a state of front wheels 1d observed when a transport vehicle (dump truck 1) for mine climbs over a small obstacle 80.
FIG. 8 is a schematic diagram illustrating a state of rear wheels 1e observed when a transport vehicle (dump truck 1) for mine climbs over a small obstacle 80.
FIG. 9 is a drawing illustrating an overview of a communication system including vehicles different in type.
FIG. 10 is a drawing schematically illustrating a relation between the sizes and risks of obstacles.
FIG. 11 is a flowchart illustrating a flow of processing up to recording and reporting obstacle information in a transport vehicle for mine.

Description of Embodiments

Hereafter, a description will be given to a vehicle to which a small obstacle information detecting/recording system in accordance with the present invention is applied with reference to the drawings. In the following description, a dump truck will be taken as an example of a transport vehicle for mine. At mines, a rock (stone) loaded on a dump truck may fall onto a road surface. Dump trucks or other construction equipment used at mines will most probably climb over such a falling object (obstacle) or touch such a falling object. However, also in other vehicles than construction equipment used at mines, an obstacle information detecting/recording system in accordance with the present invention can be utilized in lengthening the lives of tires and vehicle bodies and maintenance such as replacement/repair.

Obstacles present in a traveling route of a vehicle cannot be always detected with an environmental recognizing means from a distance sufficiently remote to avoid a collision by steering or braking. At mines, for example, a rock (stone) loaded on a dump truck may fall onto a road surface. These falling objects (obstacles) may be in such a size that no problem arises in terms of traveling safety even though they are unavoidable. Since these small obstacles are smaller than vehicles and the like, they are not always detected with an environmental recognizing means from a distance sufficiently remote for avoidance by steering or braking. Even when such a small obstacle cannot be avoided and is climbed over or touched by a traveling tire, no problem arises in traveling safety immediately after climb-over/touch. However, it is desirable to avoid such obstacles in terms of the extended-lives and maintenance of tires, a vehicle body, and the like. Even when such an obstacle as not to pose a problem in the traveling safety of a dump truck in the short view mentioned above could not be avoided by steering or braking and climb-over/touch took place, it is desirable to detect and record the fact of the climb-over/touch. Thus, it is possible to utilize the recorded information in lengthening of the lives of tires and a vehicle body and maintenance thereof. Further, it is desirable to grasp the position of an obstacle that could not be avoided by steering or braking and report it to other vehicles through a communication system. Thus, the other vehicles can grasp the position of the obstacle in advance and prevent from climbing over/touching the obstacle, for example, by decelerated running. This report may be implemented through a control system or may be directly given to other vehicles.

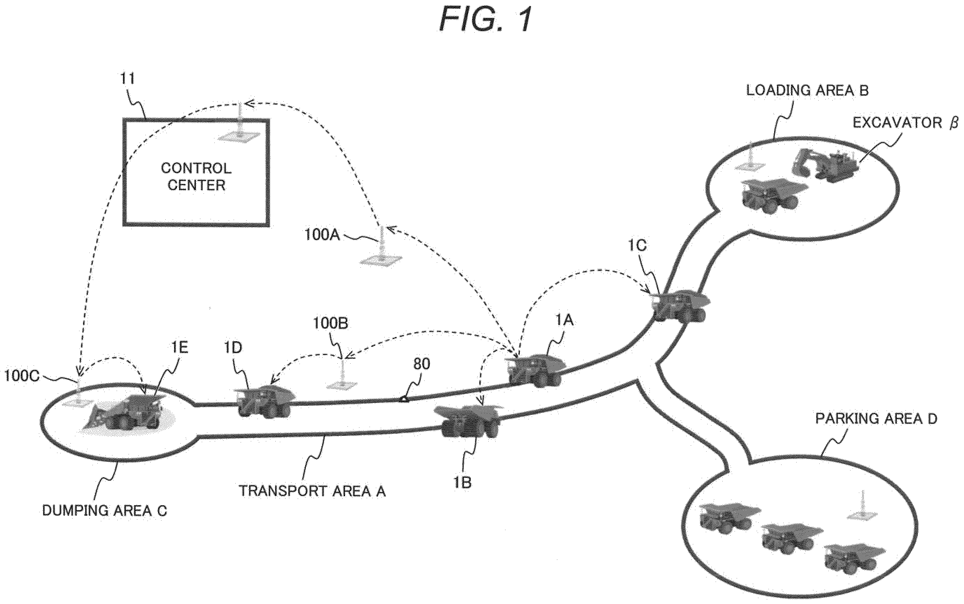

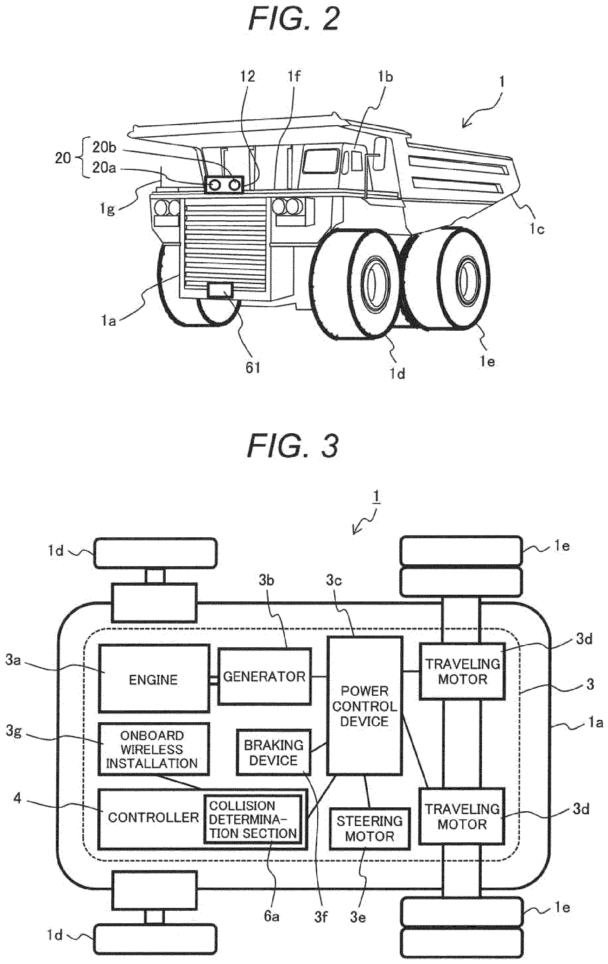

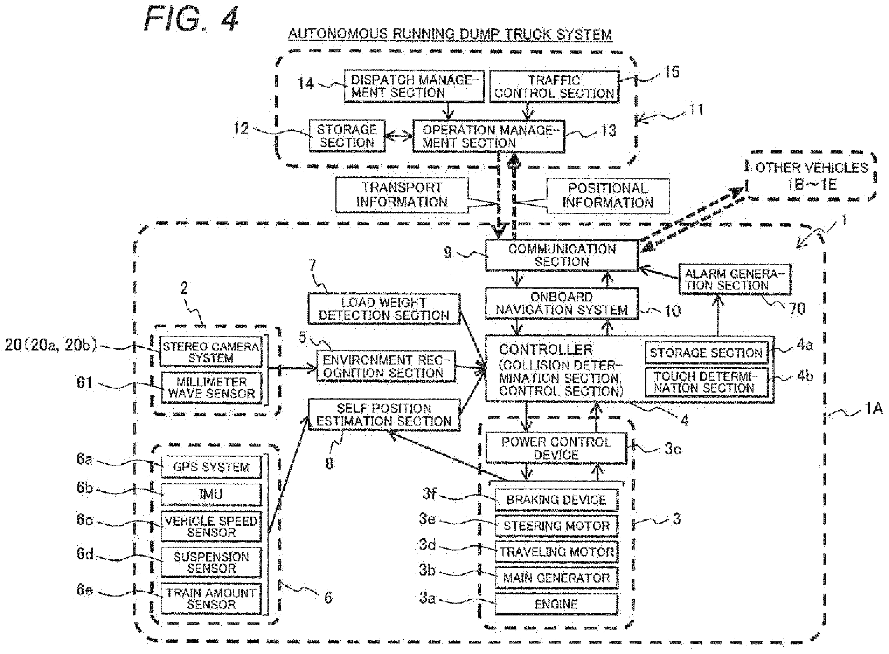

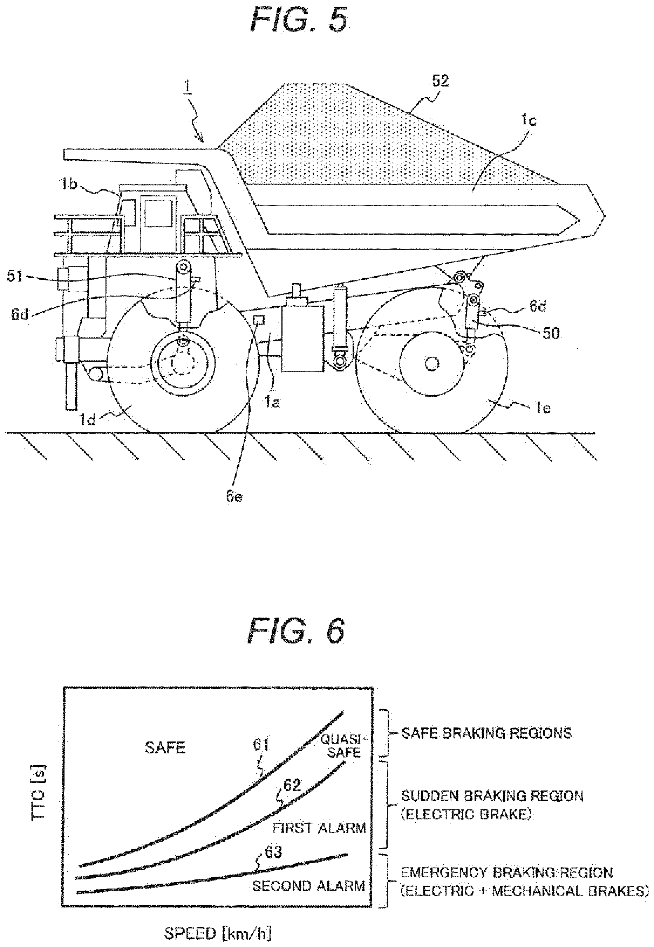

A description will be given to a dump truck 1 in an embodiment of the present invention with reference to FIG. 1 to FIG. 5. The dump truck 1 (1A) in this embodiment is configured to detect any vehicle 1D, such as another dump truck 1, ahead or any small obstacle 80, such as a stone/rock, on the road with a stereo camera system 20 or a millimeter wave radar 61 attached to the vehicle body. FIG. 1 is a schematic diagram illustrating a mine where transport vehicles (dump trucks 1) for mine in the embodiment of the present invention are used. FIG. 2 is a perspective view illustrating an overview of a dump truck 1. FIG. 3 is a block diagram illustrating an overview of a traveling driving device 3 of a dump truck 1. FIG. 4 is a block diagram illustrating an overview of the configurations of a control center and a dump truck 1 as a transport vehicle for mine used in a mine system. FIG. 5 is a schematic diagram illustrating a side face of a dump truck 1.

As illustrated in FIG. 1, dump trucks 1 travel in a transport area A as a traveling path preset at the mine. The mine is provided, for example, with: a loading area B for loading a load, such as earth and sand, onto dump trucks 1 by an excavator β; a dumping area C for dumping a load loaded in the loading area B; and a parking area D for parking dump trucks 1 for maintenance or the like. These areas B to D connect to the transport area A. The mine is provided with a control center 11 transmitting and receiving predetermined information to and from a plurality of dump trucks 1 and performing traffic control, including traveling control, on the dump trucks 1.

As illustrated in FIG. 2, each dump truck 1 is provided with a vehicle body 1a; a driver's seat 1b as a cabin provided at the front upper part of the vehicle body 1a; a bed 1c provided on the vehicle body 1a in such a manner that the bed 1c can be laid down and raised; a hoist cylinder (not shown) vertically moving the bed 1c; and right and left front wheels 1d and rear wheels 1e movably supporting the vehicle body 1a. The dump truck 1 further includes a stereo camera system 20 (20a, 20b) and a millimeter wave radar 61 attached to the front part of the vehicle. The stereo camera system 20 and the millimeter wave radar 61 detect a vehicle α, such as another dump truck 1, ahead and a small obstacle 80, such as a stone/rock, on the road.

As illustrated in FIG. 3, each dump truck 1 is provided with a traveling driving device 3. The traveling driving device 3 includes: an engine 3a; a generator 3b driven by the engine 3a; a power control device 3c supplied with electric power generated at the generator 3b; and a traveling motor 3d for driving the rear wheels 1e. Electric power supplied to the traveling motor 3d is controlled by the power control device 3c. The power control device 3c is connected to a controller 4 and is controlled by the controller 4. As illustrated in FIG. 4, the controller 4 also controls driving of a steering motor 3e of a steering section for steering the vehicle body 1a, a braking device 3f as a brake system for braking the vehicle body 1a, and the like through the power control device 3c.

To the vehicle body 1a, there are attached: an image detection device as the stereo camera system 20 for recognizing the surroundings of the vehicle body 1a, especially, the environment of the forward area in a traveling direction; and a relative information detecting device as the millimeter wave radar 61 capable of detecting the position of an obstacle relative to the relevant vehicle and a relative speed therebetween with accuracy. The image detection device as the stereo camera system 20 detects an obstacle in the recognized transport area A, especially, a vehicle α ahead and a small obstacle 80. The image detection device 20 is formed as the stereo camera system 20 made up of a plurality of, for example, two cameras 20a, 20b, as illustrated in FIG. 2. Similarly, the relative information detecting device as the millimeter wave radar 61 is capable of detecting an obstacle in the transport area A, especially, a vehicle α ahead and a small obstacle 80 and calculating the position of the obstacle and a relative speed between the relevant vehicle and the obstacle with accuracy. The relative information detecting device 61 is formed as the millimeter wave radar. The environmental recognition devices as the stereo camera systems 20, 61 constitute an obstacle detecting device.

The stereo camera system 20 includes a pair of cameras 20a, 20b. The stereo camera system 20 uses the two cameras 20a, 20b to acquire three-dimensional image information including color information of the outside world. An environment recognition section 5 estimates a road surface area based on the three-dimensional image information. The environment recognition section 5 further detects any obstacle in the estimated road surface area. The environment recognition section 5 calculates the position of the obstacle relative to the relevant vehicle and a relative speed therebetween and a type and a size of the obstacle. The millimeter wave radar 61 acquires information concerning positions and relative speeds of vehicles, obstacles, and the like in the outside world. In the following description, a rock (stone) as a load that fell down from a dump truck will be taken as an example of the obstacle. Rocks (stones) and the like as a load falling down from dump trucks are usually so small that no problem arises in traveling safety immediately after climb-over/touch even though a tire of a dump truck climbs over or touches it. In the following description, such obstacles will be referred to as small obstacle. In the following description, climb over a small obstacle 80 and touch on a small obstacle 80 will not be discriminated from each other and will be simply referred to as "touch."

The stereo camera system 20 is attached such that the center between the right and left cameras 20a, 20b is located in a central position as the central part in the crosswise direction (vehicle width direction) on the front side of the vehicle body 1a. The respective internal parameters, such as focal length and lens distortion and environmental parameters, such as positional relation and the position of installation on the vehicle body, are synchronized between the cameras 20a, 20b. Each camera 20a, 20b is directed ahead of the vehicle 1 such that their respective optical axes are parallel to each other and the cameras 20a, 20b are installed such that their image pickup areas partially overlap with each other.

The millimeter wave radar 61 is attached in the central position as the central part in the crosswise direction on the front side of the vehicle body 1a. The millimeter wave radar 61 and the stereo camera system 20 are installed in positions relative to the each other by adjusting them through calibration so as to prevent detected positions of an identical obstacle from differing from each other.

In addition to the stereo camera system 20 and the millimeter wave radar 61, as illustrated in FIG. 4, the vehicle body 1a is provided as in-vehicle sensors with: a GPS system 6a as a position detection section for detecting the position of the vehicle body 1a; IMU (Inertial Measurement Section) 6b for detecting an acceleration and a lean of the vehicle body 1a; a vehicle speed sensor 6c for detecting a vehicle speed of the vehicle body 1a; and the like.

The controller 4 is connected with: an environment recognition section 5 for recognizing the surroundings (environmental environment) of the vehicle body 1a; a load weight detection section 7 for detecting the weight of a load loaded on the bed 1c; a self position estimation section 8; and an onboard navigation system 10. The environment recognition section 5 is fed with detected information detected by the environmental recognition device 2 and acquires outside world information on, for example, a mall obstacle 80 on the road and a vehicle ahead based on the detected information. The environmental recognition device 2 is of a sensor fusion type in which the millimeter wave radar 61 is mounted in addition to the stereo camera system 20 but may be configured solely of the stereo camera system 20. Alternatively, the environmental recognition device 2 may be of a sensor fusion type in which a single-lens camera is mounted instead of the stereo camera system 20 and the single-lens camera and the millimeter wave radar 61 are combined with each other. That is, this embodiment is provided as the environmental recognition device 2 with the stereo camera system 20 as the image detection device and the millimeter wave radar 61 and the stereo camera system 20a, 20b is shown as an example of the image detection device 20.

The controller 4 determines a collision with a detected obstacle based on: a road surface area detected by the environment recognition section 5; obstacle information such as the position, speed, size, type, and the like of the obstacle ahead; a present relevant vehicle position from the self position estimation section 8, the onboard navigation system 10, and the traveling driving device 3, and information on a relevant vehicle's traveling route to take. The collision determination is made based on a time to collision TTC with the obstacle in the relevant vehicle's driving lane and automatic speed control or automatic steering control is performed at the traveling driving device 3 on a phase-by-phase basis. TTC is obtained by the following:

$$TTC = Distance\ to\ obstacle/relative\ speed\ between$$

$$relevant\ vehicle\ and\ obstacle\ (Equation\ 1)$$

The self position estimation section 8 is fed with detected information detected by the in-vehicle sensors 6 and vehicle information from the traveling driving device 3 and estimates the self position of the vehicle body 1a in the transport area A at the time of detection based on these pieces of information. The self position estimation section 8 compares a self position determined by information from the in-vehicle sensors 6 and the traveling driving device 3 with map information stored beforehand in the onboard navigation system 10, in which map information concerning the mine at which the dump trucks 1 are driven, to estimate a self position at the time of detection. The map information stored in the onboard navigation system 10 includes inclination angle information about the inclination angle of each point in the transport area A where the dump trucks 1 are driven at the mine.

In response to a collision determination, the controller 4 automatically controls the vehicle speed of the dump truck 1 by an electric brake, a retarder, or a mechanical brake or automatically controls the steering angle of the dump truck 1 by the steering motor to avoid a collision with the obstacle.

A touch determination section 4b internal to the controller 4 determines touch on an obstacle from the position of the obstacle detected at the environment recognition section 5 and speed information and information on a positional relation between the relevant vehicle and the obstacle calculated at the self position estimation section 8. Touch on an obstacle can be determined from a positional relation between the relevant vehicle and the obstacle but information on the vibration of the vehicle from the IMU 6b may be used together. Alternatively, information from a suspension sensor 6d detecting information about the suspension oil pressure and the stroke amount of the wheels determine a collision with an obstacle. Further, a wheel that has possibly touched an obstacle may be identified.

Just to determine touch on an obstacle, the suspension sensor 6d only has to be provided on the suspension 50, 51 of any one of the front and rear, right and left wheels. In this embodiment, as illustrated in FIG. 5, the suspension sensor 6d is provided on each of the suspensions 51 provided on the front wheels 1d and the suspensions 50 provided on the rear wheels. FIG. 5 depicts only the left wheels 1d, 1e and their suspensions 50, 51 but in actuality, the suspension sensor 6d is also provided on the right wheels 1d, 1e and their suspensions 50, 51.

Referring back to FIG. 4, the description will be continued. A storage section 4a internal to the controller 4 stores information derived from an obstacle 80 determined to have been touched by the touch determination section 4b, including the position, relative speed, size, risk, type, and the like of the obstacle 80. The storage section 4a further stores information derived from the relevant vehicle, including a part of the relevant vehicle that touched on the obstacle and the running speed thereof and accumulates and updates information stored in the past.

The load weight detection section 7 calculates the load weight of a load 52 (Refer to FIG. 5) loaded on the bed 1c from, for example, a predetermined load weight table or the like correlated with strain amounts. This calculation is performed based on a strain amount detected by such a strain amount sensor 6e as a load cell installed in a predetermined place on the vehicle body 1a and load weight information corresponding to the calculated load weight is outputted to the controller 4. The controller 4 corrects a braking distance of the dump truck 1 based on the load weight information outputted from the load weight detection section 7 and incorporates the corrected braking distance into collision determination. A load weight may be detected with the suspension sensor 6d provided on a suspension 51 of the front wheels 1d or a suspension 50 of the rear wheels.

The controller 4 is in connection with a communication section 9 for transmitting and receiving predetermined information to and from the control center 11. The controller 4 transmits outside world information detected by the environment recognition section 5 and positional information concerning a self position estimated at the self position estimation section 6 to the control center 11 via the communication section 9. The controller 4 receives operation management information related to dump truck 1 dispatch management, traffic control, etc. from the control center 11.

The controller 4 may be additionally provided with a configuration element for transmitting outside world information detected by the environment recognition section 5 and positional information related to a self position estimated by the self position estimation section 6 directly to other vehicles from the communication section 9.

A description will be given to a system of communication between the control center 11 and other vehicles with reference to FIG. 1. FIG. 1 depicts a situation in which a small obstacle 80 that has fallen down from a load on a dump truck 1D. A dump truck 1A as a following vehicle detects the small obstacle 80 by the environmental recognition device 2. The dump truck 1A transmits outside world information concerning the small obstacle 80 and positional information about a self position estimated by the self position estimation section 6 to the control center 11. When the dump truck 1A is positioned remotely from the control center 11 in this case, the information is transmitted to the control center 11 through a relay station 100A. Information transmitted by the dump truck 1A is transmitted from the dump truck 1A directly to dump trucks 1B, 1C positioned relatively nearby. Information from the dump truck 1A may be transmitted to a dump truck 1D positioned at a small distance through a relay station 100B. Like a dump truck 1E, information from the dump truck 1A may be received through the control center 11 and a relay station 100C. When information concerning the small obstacle 80 detected by the dump truck 1A is shared among the other dump trucks 1B to 1E, thereafter, the dump trucks 1A to 1E can avoid touch on the small obstacle 80. In this description, the dump trucks 1A to 1E have been taken as an example. However, the dump trucks 1A to 1E may be other vehicles than dump trucks.

The control center 11 is provided with: a storage section 12 in which map information of the mine, including the transport area A where each dump truck 1 travels; and an operation management section 13 managing the operation of each dump truck 1 based on map information stored in the storage section 12. The operation management section 13 can also be a communication section transmitting transport information, including a destination and a traveling route, of a specific dump truck 1 to the communication section 9 of that dump truck 1.

The operation management section 13 is in connection with: a dispatch management section 14 performing dump truck 1 dispatch management; and a traffic control section 15 controlling traffic of all the vehicles running at the mine. The operation management section 13 compares a predetermined operation pattern or the like with map information stored in the storage section 12, dispatch management information outputted from the dispatch management section 14, and traffic control information outputted from the traffic control section 15 and thereby generates operation management data for each dump truck 1 and the like. The operation management section 13 wirelessly transmits transport information of each dump truck 1 based on this operation management data to each dump truck 1. Each dump truck 1 has its power control device 3c controlled by the controller 4 in accordance with transport information received from the operation management section 13 of the control center 11 and each dump truck 1 is thereby autonomously driven.

A description will be given to a method for detecting and recording a small obstacle 80 in a dump truck 1 in this embodiment.

When running on a flat path in the transport area A, the dump truck 1 detects such a small obstacle 80 as a stone/rock on a road surface ahead by the stereo camera system 20. The environment recognition section 5 estimates a road surface area based on image information from the stereo camera system 20 and then detects the small obstacle 80 as an obstacle on the road surface in the relevant vehicle's driving lane. With respect to the small obstacle 80 in the image information from the stereo camera system 20, the environment recognition section 5 calculates the position, relative speed, size/risk, type, and the like of the small obstacle 80. Vehicle information, including running speed, yaw acceleration, steering angle, and brake operation amount, are outputted from the traveling driving device 3 and the in-vehicle sensors 6. The controller 4 determines whether the detected obstacle is located within the relevant vehicle's travel range based on information on the small obstacle 80 from the environment recognition section 5 and vehicle information from the traveling driving device 3 and the self position estimation section 8. When the controller 4 determines that the detected obstacle is located within the travel range, the controller 4 calculates TTC (Time to Collision) and determines a collision through comparison with, for example, the TTC map of the dump truck 1 shown in FIG. 6.

FIG. 6 is a schematic diagram indicating a relation between TTC and speed of transport vehicles (dump trucks 1) for mine and alarm regions. In the TTC map, the alarm regions are divided into safe region, quasi-safe region, first alarm region, and second alarm region by line segments 61 to 63 according to a relation between speed and TTC. The safe region and the quasi-safe region are safe braking regions in which tough can be avoided by ordinary brake operation. The first alarm region is a sudden braking region in which sudden braking using an electric brake or a retarder is required. The second alarm region is an emergency braking region in which emergency braking using an electric brake or a retarder together with a mechanical brake is required.

The dump truck 1 determines a chance of avoidance by steering or braking at the controller 4 according to the situation of determination of a collision with the small obstacle 80. When the dump truck determines that the obstacle is avoidable, the dump truck performs avoidance control through the traveling driving device 3 according to a command from the controller 4. Alternatively, even when it is determined at the controller 4 from TTC calculated when the small obstacle 80 was detected that it is difficult to avoid a collision by steering or braking, the dump truck attempts avoiding operation according to a command from the controller 4. Alternatively, it may be determined at the controller 4 from TTC calculated when the small obstacle 80 was detected that it is difficult to avoid a collision by steering or braking; and further, it may be determined based on information, including the size, type, risk and the like of the small obstacle 80 detected by the stereo camera system 20, from the environment recognition section 5 that no problem will arise in traveling safety even though the small obstacle 80 is touched. In this case, driving is continued without performing avoiding operation by steering or braking.

In any case, the touch determination section 4b of the controller 4 calculates whether the relevant vehicle has touched the small obstacle 80 based on: positional and relative speed information concerning the small obstacle 80 from the environment recognition section 5; and traveling route information of the relevant vehicle from the self position estimation section 8. When it is determined that the small obstacle 80 has been touched, obstacle information, including the position/size/type/risk/image and the like of the small obstacle 80, is recorded in the storage section 4a. Aside from the above obstacle information concerning the small obstacle 80, relevant vehicle information, including a running speed and a route of the relevant vehicle when, before, and after it touched the small obstacle 80, may also be recorded in the storage section 4a. Alternatively, which tire or part of the relevant vehicle the small obstacle 80 touched may be recorded.

In case of a human-operated dump truck operated by a driver, as illustrated in FIG. 4, an alarm may be issued to the driver using an alarm generation section 70. To issue this alarm, a display, sound, vibration, light flickering, or the like can be used. Like the above-mentioned autonomous running system, it is determined at a controller 4 whether the vehicle has touched any small obstacle 80. When it is determined that a small obstacle 80 has been touched, obstacle information, including the position/size/type/risk/image and the like of the small obstacle, is recorded in a storage section 4a. Aside from the above obstacle information concerning the small obstacle 80, relevant vehicle information, including a running speed and a steering angle of the relevant vehicle when, before, and after it touched the small obstacle 80, may also be recorded in the storage section 4a. Alternatively, which tire or part of the relevant vehicle the small obstacle 80 touched may be recorded. In case of an autonomous running system, the alarm generation section 70 is dispensable.

To determine whether the relevant vehicle has touched a small obstacle 80 at the touch determination section 4b of the controller 4, the following information may be utilized: positional and relative speed information concerning the small obstacle 80 from the environment recognition section 5 and information on a traveling route of the relevant vehicle from the self position estimation section 8 as well as information on the oil pressures of the wheel suspensions 50, 51 and stroke information. In this case, the information on the oil pressures of the wheel suspensions 50, 51 and the stroke information may be used together. Alternatively, information on the attitude and vibration of the relevant vehicle and the like from the IMU 6b may be used to determine touch.

Obstacle information to be recorded in the storage section 4a is accepted or rejected according to the size and the risk of the obstacle. Obstacles to be recorded in the storage section 4a in this embodiment are such small obstacles 80 as stones and rocks and will not pose any problem in terms of driving in the short view even though the obstacles are touched. However, it is desirable to record even such small obstacles 80 in terms of lengthening of the lives of tires and vehicle bodies and maintenance such as replacement/repair. That is, information on a small obstacle 80 and information on the relevant vehicle are recorded in the storage section 4a only for obstacles for which it is determined that information should be recorded to early grasp damage to the vehicle and early find a trouble cause. When there is touch on a small obstacle for which it is determined that information should be newly recorded, the information is accumulated and recorded.

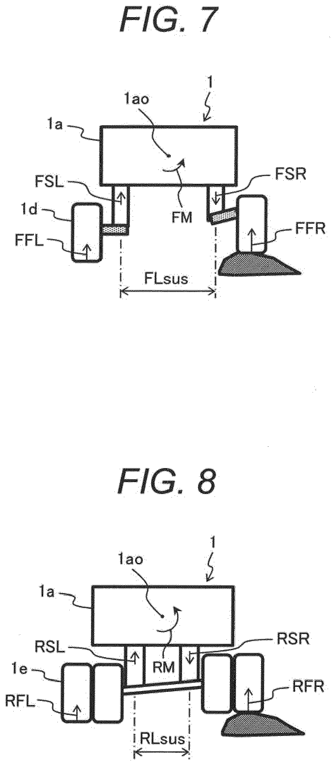

A description will be given to damage which a dump truck 1 may suffer when the dump truck 1 climbs over a small obstacle 80 with reference to FIG. 7 and FIG. 8. FIG. 7 is a schematic diagram illustrating a state of front wheels 1d observed when a transport vehicle (dump truck 1) for mine climbs over a small obstacle 80. FIG. 8 is a schematic diagram illustrating a state of the rear wheels 1e observed when a transport vehicle (dump truck 1) for mine climbs over a small obstacle 80. Damage described here is damage that will not pose any problem in traveling safety in the short view.

In general, there are two types of suspensions for dump trucks 1: rigid axle suspension and independent suspension. A type in which two wheels, right and left, are directly joined with each other through a single axle is designated as rigid axle suspension (FIG. 8). A type in which each tire is independently and freely movable is designated as independent suspension (FIG. 7). In the description of this embodiment, a dump truck in which an independent suspension is adopted for the front suspensions and a rigid axle suspension is adopted for the rear suspensions will be taken as an example. However, an identical type of suspension may be adopted both for the front suspensions 51 and for the rear suspensions 50. Alternatively, the front suspensions 51 and the rear suspensions 50 may be inverted from the configuration of this embodiment.

When a front or rear tire 1d, 1e on either side climbs over a small obstacle 80, a load difference is produced between the right and left tires. In this case, loads FFR, RFR produced on the tires on the side where the small obstacle 80 is climbed over are larger than loads FFL, RFL produced on the tires on the opposite side. Based on this load difference, a moment is produced around the central axis 1ao of the vehicle body 1a of the dump truck. The spacing RLsus between the right and left rear suspensions 50 is shorter than the spacing FLsus between the right and left front suspensions 51. For this reason, a large distortion is produced in the vehicle body 1a of the dump truck especially when a rear wheel climbs over the small obstacle 80. This distortion will not pose any problem in traveling safety in the short view but is undesirable in terms of lengthening the lives of the tires and the vehicle body. Also in terms of maintenance, an attention should be paid and such measures as shortening an interval of replacement/repair or the like should be taken.

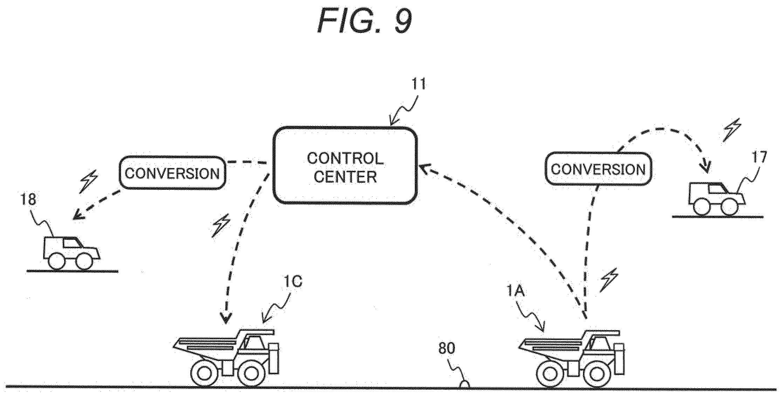

A risk of a small obstacle 80 is different from vehicle to vehicle. At mines, other vehicles than dump trucks 1 are also driven. A plurality of types of dump trucks may be used together. The above-mentioned risk can be different from vehicle type to vehicle type. A description will be given to risk definition in information communicated between vehicles with reference to FIG. 9. FIG. 9 illustrates an overview of a communication system including a plurality of vehicles different in type.

After touching a small obstacle 80, a dump truck 1A transmits outside world information concerning the small obstacle 80 and positional information on a self position estimated at the self position estimation section 6 to the control center 11 and other vehicles 1C, 17, 18. The method for this transmission is as already described with reference to FIG. 1. The outside world information concerning the small obstacle 80 from the dump truck 1A includes a risk of the small obstacle 80. This risk differs depending on the type of the vehicle and the speed of the vehicle. For this reason, information transmitted from one vehicle must be converted into a risk compatible with each receiving vehicle.

Consequently, when information including a risk is transmitted from the dump truck 1A to the other vehicles 1C, 18 through the control center 11 as illustrated in FIG. 9, the risk is converted into a risk compatible with each vehicle at the control center 11. When information including a risk is directly transmitted from the dump truck 1A to another vehicle 17, the risk may be converted into a risk compatible with the vehicle at the controller 4 of the dump truck 1A.

Alternatively, when information is transmitted to the other vehicles 1C, 17, 18, the ID of the dump truck 1A as a transmission source (risk determiner) may be affixed to the information. In this case, in the storage section 4a of each vehicle receiving the information, there are stored the ID of each vehicle and a method (transformation) for converting a risk for the vehicle to which the ID belongs into the relevant vehicle's own risk. The vehicle that received the information converts the received risk based on the ID of the transmission source into the relevant vehicle's own risk.

Alternatively, when transmitting information to the other vehicles 1C, 17, 18, the dump truck 1A as a transmission source (risk determiner) may convert the risk into a standard risk. In this case, in the storage section 4a of each vehicle receiving the information, there is stored a method (transformation) for converting the standard risk into the relevant vehicle's own risk. The vehicle that received the information convers the received risk into the relevant vehicle's own risk based on the stored conversion method. According to this system, a transmission source only has to transmit information including one risk and is capable of transmitting information to all the vehicle by a single transmitting operation.

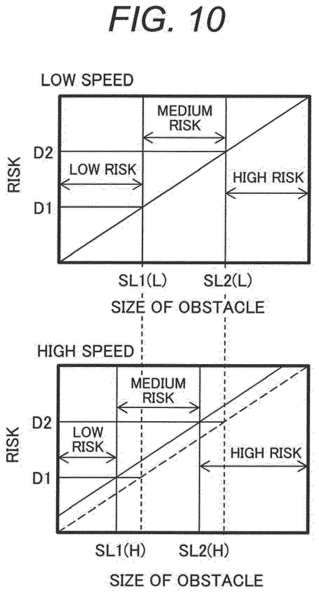

To determine risks, for example, it is advisable to correlate the types and speeds of vehicles with the sizes of small obstacles 80 and establish threshold values. FIG. 10 schematically indicates a relation between the sizes and risks of obstacles.

The upper drawing indicates risk threshold values at the time of low speed and the lower drawing indicates risk threshold values at the time of high speed. As the speed of a vehicle varies, a risk of a small obstacle 80 in an identical size also varies. In general, a risk of a small obstacle 80 in an identical size is increased with increase in vehicle speed. For this reason, lower threshold values are defined for risk determination at the time of high speed than at the time of low speed. That is, threshold values are defined such that a higher risk is determined for a small obstacle 80 at the time of high speed than at the time of low speed. In this embodiment, threshold values are defined in three stages: high risk, medium risk, and low risk. Risks may be defined in two stages or may be defined in more stages. FIG. 10 is a schematic diagram, in which the risk linearly varies versus the size of the small obstacle 80. However, the risk need not linearly vary versus the size of the small obstacle 80.

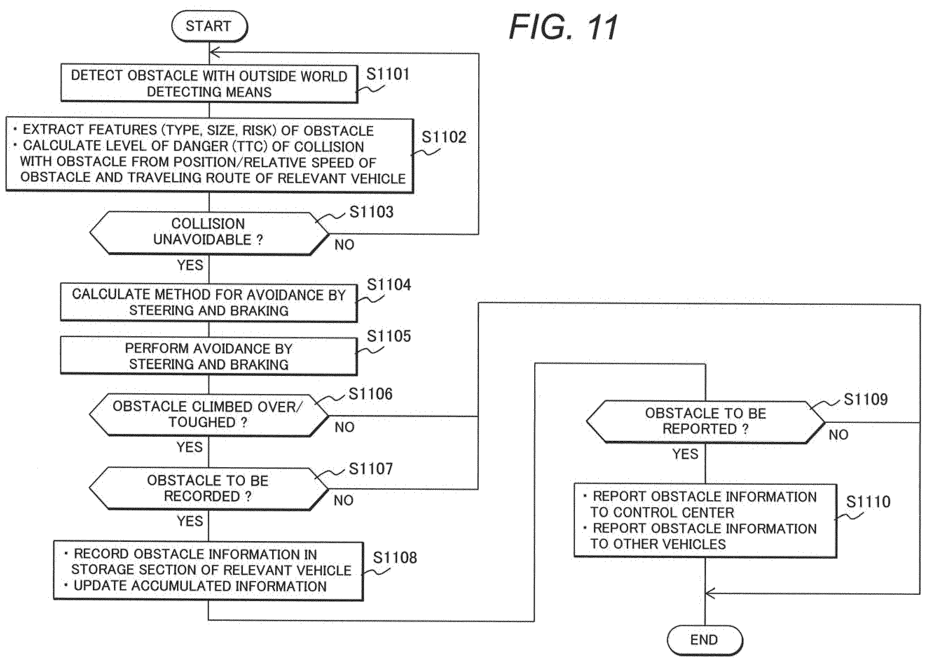

A description will be given to a flow of processing up to recording obstacle information with reference to FIG. 11. FIG. 11 is a flowchart illustrating a flow of processing up to recording and reporting obstacle information in a transport vehicle for mine.

At Step 1101, an obstacle is detected with the environmental recognition device (outside world detecting means) 2. At Step 1102, features (type, size, risk) of the obstacle are extracted. Further, a level of danger of a collision (TTC) with the obstacle is calculated from the position/relative speed of the obstacle and a traveling route of the relevant vehicle.

At Step 1103, it is determined whether a collision with the obstacle will occur based on the result of calculation of a level of danger of a collision (TTC) at Step 1102. When it is determined that a collision with the obstacle will not occur, the flow returns to Step 1102 and obstacle detection is continued. When it is determined that a collision with the obstacle will occur, the flow proceeds to Step 1104.

At Step 1104, a method for avoidance by steering and braking is calculated. At Step 1105, an avoiding operation is performed based on the method for avoidance calculated at Step 1104.

After the avoiding operation, at Step 1106, touch on the obstacle is determined. When it is determined that there was not touch on the obstacle, the processing is terminated without recording or reporting obstacle information. When it is determined that there was touch on the obstacle, the flow proceeds to Step 1107. The details of this determination of touch on the obstacle are as described above.

At Step 1107, it is determined whether the detected obstacle should be recorded. The details of this determination are as already described. When it is determined that the detected obstacle need not be recorded, the processing is terminated without recording or reporting obstacle information. When it is determined that the detected obstacle is a small obstacle 80 to be recorded, the accumulated information in the storage section 4a is updated.

At Step 1109, it is determined whether the detected obstacle should be reported to other vehicles. This determination can be made similarly to the determination of whether the obstacle should be recorded. When it is determined that the detected obstacle need not be reported, the processing is terminated without reporting obstacle information. When it is determined that the detected obstacle is a small obstacle 80 to be reported, the flow proceeds to Step 1110.

At Step 1110, obstacle information is reported to the control center 11 and other vehicles. With respect to the system of communication to other vehicles, there are various methods as mentioned above.

In this embodiment, as described up to this point, the dump truck 1 determines touch between such a small obstacle 80 as a stone/rock ahead detected with the stereo camera system 20 and the relevant vehicle. The small obstacle 80 determined to have been touched may not pose any problem in traveling safety in the short view but it may be determined that information should be recorded in terms of lengthening of the lives of tires and a vehicle body and maintenance such as replacement/repair. In this case, small obstacle information (position, size, risk, type, image, and the like) and accumulative climb-over/touch information are recorded in the storage section 4a of the relevant vehicle. Alternatively, relevant vehicle information, including a running speed and a route, when, before, and after the relevant vehicle climbs over/touches the small obstacle 80 may be recorded in the storage section 80. This makes it possible to utilize the recorded information to lengthen the lives of the tires and the vehicle body and perform maintenance, such as replacement/repair and to early grasp damage to the vehicle and early find a trouble cause to implement operation with a high availability factor.

Further, climb-over/touch on the small obstacle 80 is determined. To determine climb-over/touch, positional and relative speed information concerning the small obstacle 80 from the environment recognition section 5 and traveling route information of the relevant vehicle from the self position estimation section 8 are used. Alternatively, oil pressure information of wheel suspensions and/or stroke information may be used to determine climb-over/touch. Alternatively, information about the attitude and the vibration of the relevant vehicle from the IMU 6b may be used to determine climb-over/touch. Alternatively, more than one of the above-mentioned methods may be used together to determine climb-over/touch. As a result, it is possible to determine climb-over/touch with accuracy. In addition, when climb-over/touch has occurred in which tire or part of the relevant vehicle is determined, the accuracy in early grasping damage to the vehicle and early finding a trouble cause is further enhanced and operation with a higher availability factor can be implemented.

In this embodiment, the relevant vehicle transmits information, including the position, size, risk, and the like of a small obstacle 80 that was probably climbed over/touched, to other vehicles running at the mine so that following other vehicles can avoid touch/climb-over by steering or braking. Alternatively, a communication traffic volume can be reduced as much as possible by accepting or rejecting information to be reported through communication according to a risk of the obstacle. Alternatively, the small obstacle 80 may be removed by reporting small obstacle information to another vehicle, such as a dozer or a service car, through the control center 11 or by vehicle-to-vehicle communication.

The relevant vehicle reports information on a small obstacle that the relevant vehicle inevitably climbed over/touched to other vehicles running at the mine so that the other vehicles can avoid touch by steering or braking. This makes it possible to prevent the other vehicles from touching the small obstacle 80 and thus provide a mine transport vehicle system high in availability factor.

The target of the configuration elements described in relation to this embodiment is not limited to mine vehicles and the configuration elements are also applicable to vehicles running on a construction site and general automobiles. Also in these cases, the same effects are obtained.

The present invention is not limited to the above-mentioned embodiment and can be variously modified. For example, the above-mentioned embodiment has been described for making the present invention easier to understand and the present invention need not be provided with all the configuration elements described above.

Reference Signs List

1 --- Dump truck (transport vehicle for mine),
1a --- Vehicle body,
1d --- Front wheel,
1e --- Rear wheel,
2 --- Environmental recognition device,
2a, 2b --- Stereo camera system,
6a ---- GPS system (position detection section),
6b --- IMU,
4a --- Storage section,
4b --- Touch determination section,
5 --- Environment recognition section (detected information correction section),
6 --- Vehicle information detection section (in-vehicle sensors),
7 --- Load weight detection section,
8 --- Self position estimation section,
9 --- Communication section,
10 --- Onboard navigation system,
11 --- Control center,
20 --- Image detection device,
61 --- Relative information detecting device (millimeter wave sensor),
70 --- Alarm generation section,
80 --- Small obstacle.

## Claims

1. A vehicle comprising:

   a vehicle body running on a tire;
   an environmental recognition device detecting any obstacle ahead of the vehicle body;
   a touch determination section determining touch on the tire; and
   a storage section recording information on a touched obstacle,
   wherein the storage section records information on an obstacle determined to have been touched by the touch determination section among obstacles detected by the environmental recognition device.

2. The vehicle according to Claim 1, comprising:

   an environment recognition section acquiring outside world information of the vicinity of the vehicle body based on detected information detected by the environmental recognition device.

3. The vehicle according to Claim 2,

   wherein the environmental recognition device includes a stereo camera system acquiring three-dimensional image information,

wherein the environment recognition section has a function of calculating the size of an obstacle based on the three-dimensional image information, and

wherein information on the obstacle includes at least information on the size of the obstacle.

4. The vehicle according to Claim 3,

wherein a threshold value is provided for selecting the size of an obstacle to be recorded in the storage section from among obstacles detected by the environmental recognition device and the threshold value is varied according to the speed of the vehicle.

5. The vehicle according to Claim 2, comprising:

a self position estimation section estimating a self position of the vehicle body based on detected information from an in-vehicle sensor,

wherein the environment recognition section acquires positional information on an obstacle as the outside world information, and

wherein the touch determination section determines touch on an obstacle based on positional information on the obstacle acquired by the environment recognition section and a self position estimated by the self position estimation section.

6. The vehicle according to Claim 1, comprising:

a suspension sensor as an in-vehicle sensor detecting at least either of the oil pressure and the stroke amount of a wheel suspension,

wherein the touch determination section determines touch on an obstacle based on detected information from the suspension sensor.

7. A transport vehicle for mine used at a mine as a vehicle according to Claim 1,

wherein information on a touched obstacle is transmitted to a control center or another vehicle running at the mine.

8. The vehicle according to Claim 1,

wherein a position of a relevant vehicle that touched an obstacle is identified and recorded as information on the obstacle.

9. An operation system for operating a transport vehicle for mine used at a mine as a vehicle according to Claim 8,

wherein information on a recorded obstacle is reported to another vehicle.

FIG. 1

EP 3 287 333 A1

## FIG. 2

## FIG. 3

# FIG. 4

AUTONOMOUS RUNNING DUMP TRUCK SYSTEM

- 14 — DISPATCH MANAGEMENT SECTION
- 15 — TRAFFIC CONTROL SECTION
- 11
- 12 — STORAGE SECTION
- 13 — OPERATION MANAGEMENT SECTION

TRANSPORT INFORMATION

POSITIONAL INFORMATION

OTHER VEHICLES 1B~1E

1

9 — COMMUNICATION SECTION

ALARM GENERATION SECTION — 70

7 — LOAD WEIGHT DETECTION SECTION

ONBOARD NAVIGATION SYSTEM — 10

2 — STEREO CAMERA SYSTEM
20 (20a, 20b)
61 — MILLIMETER WAVE SENSOR

5 — ENVIRONMENT RECOGNITION SECTION

CONTROLLER (COLLISION DETERMINATION SECTION, CONTROL SECTION) — 4

STORAGE SECTION — 4a
TOUCH DETERMINATION SECTION — 4b

1A

SELF POSITION ESTIMATION SECTION — 8

POWER CONTROL DEVICE — 3c

6a — GPS SYSTEM
6b — IMU
6c — VEHICLE SPEED SENSOR
6d — SUSPENSION SENSOR
6e — TRAIN AMOUNT SENSOR
6

3f — BRAKING DEVICE
3e — STEERING MOTOR
3d — TRAVELING MOTOR
3b — MAIN GENERATOR
3a — ENGINE
3

EP 3 287 333 A1

## FIG. 5

## FIG. 6

## FIG. 7

## FIG. 8

FIG. 9

## FIG. 10

*FIG. 11*

START

DETECT OBSTACLE WITH OUTSIDE WORLD DETECTING MEANS — S1101

• EXTRACT FEATURES (TYPE, SIZE, RISK) OF OBSTACLE
• CALCULATE LEVEL OF DANGER (TTC) OF COLLISION WITH OBSTACLE FROM POSITION/RELATIVE SPEED OF OBSTACLE AND TRAVELING ROUTE OF RELEVANT VEHICLE — S1102

COLLISION UNAVOIDABLE ? — S1103
NO
YES

CALCULATE METHOD FOR AVOIDANCE BY STEERING AND BRAKING — S1104

PERFORM AVOIDANCE BY STEERING AND BRAKING — S1105

OBSTACLE CLIMBED OVER/ TOUGHED ? — S1106
NO
YES

OBSTACLE TO BE RECORDED ? — S1107
NO
YES

• RECORD OBSTACLE INFORMATION IN STORAGE SECTION OF RELEVANT VEHICLE
• UPDATE ACCUMULATED INFORMATION — S1108

OBSTACLE TO BE REPORTED ? — S1109
NO
YES

• REPORT OBSTACLE INFORMATION TO CONTROL CENTER
• REPORT OBSTACLE INFORMATION TO OTHER VEHICLES — S1110

END

## INTERNATIONAL SEARCH REPORT

International application No.

PCT/JP2016/056707

A. CLASSIFICATION OF SUBJECT MATTER
*B60S5/00*(2006.01)i, *B60P1/04*(2006.01)i

According to International Patent Classification (IPC) or to both national classification and IPC

B. FIELDS SEARCHED

Minimum documentation searched (classification system followed by classification symbols)
B60S5/00, B60P1/04

Documentation searched other than minimum documentation to the extent that such documents are included in the fields searched
Jitsuyo Shinan Koho          1922–1996   Jitsuyo Shinan Toroku Koho   1996–2016
Kokai Jitsuyo Shinan Koho    1971–2016   Toroku Jitsuyo Shinan Koho   1994–2016

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>A | JP 2010-134961 A  (Komatsu Ltd.),<br>17 June 2010 (17.06.2010),<br>paragraphs [0091] to [0111], [0133] to [0136],<br>[0176] to [0199]; fig. 1 to 3, 8 to 9<br>& US 6539294 B1<br>column 21, line 20 to column 23, line 59;<br>column 25, line 61 to column 26, line 13;<br>column 30, line 1 to column 33, line 2; fig. 1<br>to 3, 8 to 9<br>& WO 2000/033152 A1 | 1-3,5-9<br>4 |
| Y | JP 2010-086362 A  (Konica Minolta Holdings,<br>Inc.),<br>15 April 2010 (15.04.2010),<br>paragraphs [0003] to [0006], [0017] to [0020]<br>(Family: none) | 1-3,5-9 |

| ☒ | Further documents are listed in the continuation of Box C. | ☐ | See patent family annex. |

\* Special categories of cited documents:
"A" document defining the general state of the art which is not considered   to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search<br>19 May 2016 (19.05.16) | Date of mailing of the international search report<br>31 May 2016 (31.05.16) |
|---|---|
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (January 2015)

**INTERNATIONAL SEARCH REPORT**

International application No.

PCT/JP2016/056707

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2012-221134 A  (Hitachi Automotive Systems, Ltd.),<br>12 November 2012 (12.11.2012),<br>paragraphs [0015] to [0017]<br>(Family: none) | 1-3,5-9 |
| Y | JP 2008-221906 A  (Alpine Electronics, Inc.),<br>25 September 2008 (25.09.2008),<br>paragraphs [0006] to [0007], [0014], [0016], [0021]<br>(Family: none) | 1-3,5-9 |
| Y<br>A | JP 2006-151057 A  (Toyota Motor Corp.),<br>15 June 2006 (15.06.2006),<br>paragraphs [0012], [0028], [0033] to [0039];<br>fig. 1, 3<br>& US 2006/0111853 A1<br>paragraphs [0033], [0038] to [0046]; fig. 1, 3<br>& EP 1661737 A2 | 6<br>4 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEI111999296229 B